# EUROPÄISCHE PATENTSCHRIFT

(11) **EP 1 397 239 B1**
(45) Veröffentlichungstag und Bekanntmachung des Hinweises auf die Patenterteilung: **21.05.2014**
(21) Anmeldenummer: 02780753.6
(22) Anmeldetag: 09.04.2002
(51) Int. Cl.: B29C 70/50, B29C 47/50, B29C 47/76, B29C 47/00, B29C 47/10, B29K 105/06

(54) **VERFAHREN ZUR HERSTELLUNG EINES BAUTEILS**
METHOD FOR PRODUCING A COMPONENT
PROCEDES DE FABRICATION D'UN ELEMENT STRUCTURAL

(30) Priorität: 19.06.2001 DE 10129224
(43) Veröffentlichungstag der Anmeldung: 17.03.2004
(73) Patentinhaber: Daimler AG, 70327 Stuttgart (DE)
(72) Erfinder: HERMANN, Andreas, 71116 Gärtringen (DE); ILZHÖFER, Karl-Heinz, 73230 Kirchheim (DE); SCHUH, Thomas, 71336 Waiblingen (DE); WESSE, Thorsten, 71126 Gäufelden (DE)
(74) Vertreter: JENSEN & SON
(86) Internationale Anmeldenummer: PCT/EP2002/003909
(87) Internationale Veröffentlichungsnummer: WO 2002/102577

(56) Entgegenhaltungen:
- EP-A- 0 566 830
- EP-A- 1 027 974
- US-A- 5 185 117
- US-A- 5 202 071

## Beschreibung

Die Erfindung betrifft ein Verfahren zur Herstellung eines Halbzeugs für ein Bauteil aus einem duroplastischen faserverstärkten Verbundkunststoff.

Die Herstellung von Bauteilen aus Sheet-Molding-Compounds (SMC) ist ein ausgesprochen aufwendiges und bezüglich der Qualitätssicherung schwer kontrollierbares Verfahren.
Unter SMC-Materialien werden im Folgenden duroplastische, faserverstärkte Verbundkunststoffe verstanden. Zunächst werden hierzu Rohmaterialien u. a. Harze, Härter, Verdünnungsmittel und Füllstoffe wie Kalziumcarbonat oder Aluminiumhydroxid in einem Behälter zu einer Rohmaterialmischung gemischt.

Durch diesen Mischvorgang wird bereits Luft in Form von feinen Bläschen eingebracht, die später die Bauteilqualität z. B. durch Poren negativ beeinflussen. Zudem erfolgt durch das Mischen, das durch einen Rührer erfolgt ein nicht exakt regelbarer Energieeintrag, der wiederum Auswirkung auf die Viskosität der Rohmaterialmischung hat.

Diese Mischung wird nun aus einem Vorratsbehälter in eine sogenannte SMC-Anlage gefüllt. Die SMC-Anlage dient zur Herstellung von SMC-Halbzeugen. Hierzu wird die Mischung mit einem Verdickungsmittel (meist Magnesiumoxid) versehen und auf eine Endlosfolie, die sich horizontal bewegt, gegossen und mit einem Rakel auf eine gewünschte Dicke von üblicherweise zwischen 1 mm und 3 mm geglättet. Die Folie dient als Tragfolie für die Rohmaterialmischung.

Im weiteren Verlauf werden Fasern, insbesondere Glasfasern auf die Rohmaterialmischung geschnitten bzw. gebrochen. Es erfolgt eine gleichmäßige Verteilung von geschnittenen Glasfasern auf der Oberfläche des Rohmaterials. Eine weitere, zeitgleich verlaufende Folie mit Rohmaterialmischung wird nun so auf die Fasern gefügt, dass ein endloses Band entsteht, das an der Ober- und Unterseite durch eine Folie geschützt ist und im Inneren die Rohmaterialmischung inklusive Fasern enthält. Dieses Band durchläuft nun verschiedene Rollenbänder wobei es zusammengedrückt wird und die Fasern von der Mischung imprägniert werden. Gleichzeitig wird das Band durch diesen Vorgang grob entlüftet.

Das Band wird als Halbzeugmatte aufgerollt und einem Reifeprozess von etwa 2-7 Tagen unterzogen. Anschließend wird das Halbzeug nach einem gewünschten Zielgewicht geschnitten und anschließend in einer Presse mit einem Formwerkzeug zu einem Bauteil verpresst. Während des Pressens wird das Halbzeug erhitzt, wobei es zu einer Aushärtung des Bauteils kommt. Ein derartiges Verfahren wird beispielsweise in der DE 199 49 318 A 1 beschrieben.

Nachteile dieses Verfahrens liegen vor allem in der aufwendigen, langwierigen Prozessgestaltung und in der unzureichenden Möglichkeit zur Qualitätssicherung. Das Flächengewicht und andere Parameter des Halbzeugs können auf Grund von Viskositätsschwankungen nicht ausreichend genau eingehalten werden, zudem werden in verschiedenen Verfahrensschritten (Mischen der Rohmaterialien, Fügen der Folien) Lufteinschlüsse eingebracht, die die Dichte des Materials, bzw. das Flächengewicht des Halbzeugs schwanken lassen. Diese Schwankungen führen dazu, dass sehr aufwendige Presswerkzeuge konstruiert und hergestellt werden müssen, die den Prozess weiter verteuern. Diese konzeptionellen Nachteile haben bisher dazu geführt, dass derartige SMC-Materialien eine Verwendung in einem Großserienprozess für hochwertige Bauteile weitestgehend versagt geblieben ist.

Aus der US 5,185,117 ist bereits ein Verfahren zur Extrusionsdurchmischung von thermoplastischem Harz mit Verstärkungsfasern in einer Mehrfach-Extruderanordnung als bekannt zu entnehmen. Dabei umfasst die Extrudervorrichtung prinzipiell einen Harzextruder und einen Mischextruder. Der Harzextruder umfasst eine langgestreckte Schnecke, mittels welcher das thermoplastische Harzmaterial zu befördern ist. Dieses wird im Bereich einer Zufuhrquelle in Form von Harzpellets zugeführt und im Verlauf des Extrudierens entsprechend aufgeschmolzen, bevor es im Bereich eines Harzschmelzeeinlasses in den Mischextruder gelangt. Stromaufwärts dieses Harzschmelzeinlasses umfasst der Mischextruder darüber hinaus einen Einlass für Fasermaterial, welches dann im Verlauf der Beförderung durch den Mischextruder mit der Harzschmelze vermischt wird. Sowohl der Einlass für die Harzschmelze wie auch der stromaufwärts angeordnete Einlass für das Fasermaterial sind dabei am Anfang des Mischextruders angeordnet, um die Mischung der Verstärkungsfasern und des thermoplastischen Harzmaterials zu erreichen.

Aus der EP 0 285 982 A2 ist darüber hinaus ein Verfahren sowie eine Vorrichtung zum Herstellen eines Formteils aus einer faserhaltigen, duroplastischen Formmasse als bekannt zu entnehmen, bei welcher die Formmasse mittels einer Düse in einen Formhohlraum eines Pressformwerkzeuges eingebracht wird. Die als Strang ausgebildete Formmasse wird dabei auf dem Boden des Formhohlraums platziert, indem die Achsrichtung des Strangs bzw. der Strangabschnitte beim Ablegen jeweils auf die örtlichen Festigkeitserfordernisse des zu fertigenden Formteils abgestimmt wird bzw. werden.

Aufgabe der Erfindung ist es daher, ein Verfahren zur Herstellung eines Halbzeugs für ein Bauteil aus einem duroplastischen faserverstärkten Verbundkunststoff bereitzustellen, das gegenüber dem Stand der Technik niedrigere Prozesskosten verursacht und eine bessere Qualitätssicherung erlaubt.

Die Lösung der Aufgabe ergibt sich aus einem Verfahren mit den Merkmalen des Patenanspruchs 1.

Das Verfahren nach Patentanspruch 1 umfasst eine Rohmaterialaufbereitung und eine Halbzeugherstellung. Die Rohmaterialaufbereitung erfolgt erfindungsgemäß in einer Kaskade von 3 Extrudern. Hierzu werden die Rohmaterialien in den Extruder gegeben und homogen vermischt. Zu den Rohmaterialien gehören hierbei u. a. Harz, Härter, Verdünnungsmittel wie Styrol, Füllstoffe (z. B. Kalziumkarbonat, Aluminiumhydroxid oder Kieselsäure), sonstige Additive und Fasern. Die Viskosität kann gezielt eingestellt werden, die Lufteinsschlüsse werden sehr gering gehalten.

Ein Halbzeug wird anschließend direkt von dem Extruder durch ein Werkzeug mit einer gewünschten Form gepresst. Das Werkzeug bildet üblicherweise die Form einer rechteckigen Platte ab, es können jedoch auch andere Geometrien dargestellt werden, die dem endgültigen Bauteil am besten entsprechen. Auf dies Weise kann auf einen Verschnitt der Halbzeuge verzichtet werden wodurch Rohstoffkosten eingespart werden.

Die Rohmaterialaufbereitung und die Halbzeugherstellung erfolgen dadurch in einem integrierten, kontinuierlichen Verfahrensschritt. Es werden somit mehrere Verfahrensschritte z. B. das Reifen des Halbzeuges vermieden, was erheblich die Produktionskosten reduziert und die Qualitätskontrolle erleichtert. Die erfindungsgemäß hergestellten Halbzeuge weisen gegenüber dem Stand der Technik deutlich konstantere Materialdichten, Flächengewichte und Geometrieabmessungen auf, was wiederum die Bauteilformgebung erleichtert und zur Verwendung von kostengünstigeren Formgebungswerkzeugen führen kann.

Besonders vorteilhaft lässt sich die Rohmaterialaufbereitung gestalten, wenn eine Kaskade von Extrudern eingesetzt wird. Die einzelnen Komponenten des Rohmaterials können gezielt zugeben werden. Die Extruder weisen Förderschnecken (z. B. Planetenschnecken, Doppelschnecken, Einschnecken) auf, die das Material mischen, homogenisieren und ohne zusätzlichen Lufteintrag fördern. Die Schnecken der einzelnen Extruder in der Kaskade weisen bevorzugt unterschiedliche Geometrien bzw. Bauformen auf. Somit ist es möglich die einzeln eingebrachten Rohmaterialen optimal in die Rohmaterialmischung im Extruder einzubringen und zu homogenisieren. Weitere Parameter, die Einfluss auf die Homogenisierung der Rohmaterialmischung nehmen, sind die Drehzahl und Laufrichtung der Extruderschnecke.

Eine Entlüftung eines oder mehrerer Extruder führt zu einer weitern Optimierung der Halbzeugqualität, insbesondere zu einem konstanteren Flächengewicht des Halbzeugs.

Eine weitere vorteilhafte Ausgestaltungsform der Erfindung besteht darin, dem mindestens einen Extruder Endlosfasern zuzuführen, die direkt während des Einführens oder kurz vorher auf eine gewünschte Länge geschnitten oder insbesondere bei Glasfasern gebrochen werden. Das Einführen der Fasern erfolgt bevorzugt am Ende des Extrusionsverfahrens, da so eine schädliche Scherbeanspruchung der Fasern vermieden wird.

Es kann jedoch auch zweckmäßig sein, die Endlosfasern in den Extruder einzuführen wobei diese durch die Extruderschnecke zerkleinert werden. Zusätzlich oder alternativ zu Kurzfasern besteht durch das erfindungsgemäße Verfahren die Möglichkeit am Ende des Extrusionsprozesses Endlosfasern direkt in das Formgebungswerkzeug einzuführen ohne diese zu zerkleinern. Diese Fasern wirken als unidirektionale Langfaserverstärkung, was die Bauteilfestigkeit erhöht.

Die Fasern sind üblicherweise Glasfasern, die eine ausreichend hohe Zugfestigkeit aufweisen und dabei vergleichsweise kostengünstig sind. Zweckmäßig sind jedoch auch andere Faserarten, wie Kohlenstofffasern oder organische Fasern wie Aramidfasern.

Eine Vorrichtung zur Durchführung des Verfahrens ist offenbart. Eine Kaskade von mehreren Extrudern ist durch Rohmaterialien aus verschiedenen Einzelkomponenten füllbar. Extruderschnecken homogenisieren das Rohmaterial und befördern es unter Druck durch eine Auslassöffnung in ein Formgebungswerkzeug. Das Formgebungswerkzeug dient zur Formgebung eines Halbzeuges.

Zur Optimierung der Homogenität des Rohmaterials ist der oder die Extruder mit einer Entlüftung versehen, durch die Luft, die eventuell in den Rohmaterialien enthalten ist, entweichen kann. Mindestens ein Extruder weist dabei eine Faserzuführungsvorrichtung auf. Diese Vorrichtung befördert Endlosfasern direkt in den Extruder, bzw. in die Extruderschnecke, schneidet bzw. bricht die Fasern in die gewünschte Länge und mischt diese dem Rohmaterial bei.

Besonders bevorzugte Ausgestaltungsformen der Erfindung werden im folgenden Beispiel und durch die einzige Figur näher beschrieben.

Es zeigt:

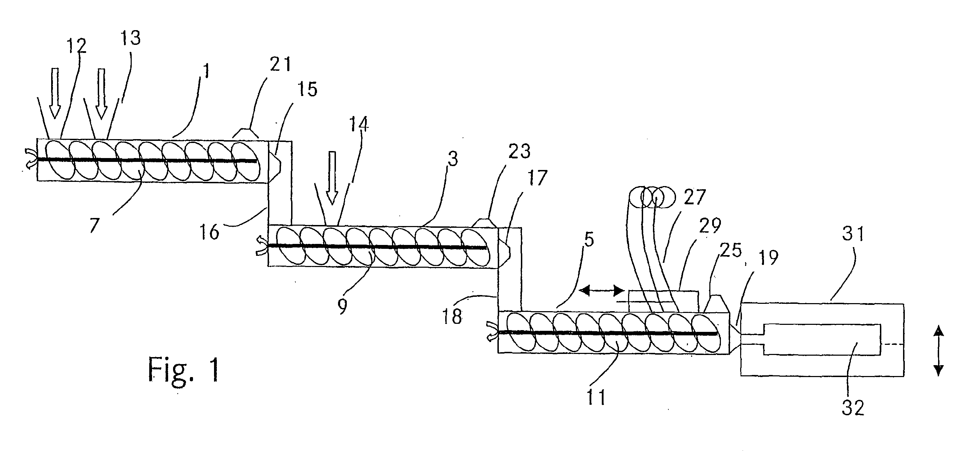

- **Figur 1**: eine Vorrichtung zur Durchführung eines Verfahrens nach Beispiel 1.

Eine Kaskade von drei Extrudern 1, 3, 5, gemäß Fig. 1, mit Extruderschnecken 7, 9, 11 weist Befüllungsvorrichtungen 12, 13, 14 auf. An einem Ende sind die Extruder jeweils mit einer Auslassöffnung 15, 17, 19 versehen. Die Extruder 1 und 3 sind über Zuführschächte 16 und 18 verbunden. Zusätzlich weisen die Extruder jeweils eine Entlüftungsvorrichtung 21, 23, 25 auf. Der Extruder 5 ist mit einer Faserschneidevorrichtung 29 versehen, die für die Zerkleinerung von Endlosfasern 27 und der Zuführung von geschnitten Fasern in den Extruder 5 dient. Die Auslassöffnung 19 des Extruders 5 mündet in ein Formgebungswerkzeug 31, das einen Formhohlraum 32 aufweist und zur Darstellung von SMC-Halbzeugen geeignet ist.

### Beispiel

Der Extruder 1 wird über die Befüllungsvorrichtungen 12 und 13 mit den flüssigen Komponenten des Rohmaterials (Harz, Härter, Styrol, ggf. Additive) befüllt. Diese Komponenten werden in der Extruderschnecke 7 homogenisiert. Lufteinschlüsse, die eventuell beim Befüllen eingebracht werden, werden während des Homogenisiervorgangs im Extruder 1 durch ein Entlüftungsventil 21 entlüftet. Über die Auslassöffnung 15 und dem Zuführschacht 16 wird das homogenisierte flüssige Rohmaterial dem Extruder 3 zugeführt.

Durch die Befüllvorrichtung 14 werden nun weitere Rohmaterialien in Form von Feststoffkomponenten beigemischt, die als Füllstoffe dienen. Als Feststoffkomponenten eignen sich insbesondere Kalziumcarbonat, Aluminiumhydroxid oder Kieselsäure. Auf eine Verdickungsmittel wie z. B. Magnesiumoxid, wie es im herkömmlichen Prozess eingesetzt wird, kann im erfindungsgemäßen Verfahren verzichtet werden. Die Rohmaterialmischung wird wiederum mit den neu zugefügten Komponenten homogenisiert, es erfolgt eine weitere Entlüftung über das Entlüftungsventil 23 und eine Weiterleitung der homogenisierten Mischung über die Austrittsöffnung 17 und den Zuführschacht 18 in den Extruder 5.

Durch die Extruderschnecke 11 des Extruders 5 wird die Mischung weiter befördert und weiter homogenisiert. Am Ende des Extruders 5 werden Glasfasern 27 in die Rohmaterialmischung eingeführt. Die Glasfasern 27, die als Endlosfasern ausgestaltet sind, werden einer Zerkleinerungsvorrichtung 29 zugeführt in der sie in Kurzfasern mit einer Länge zwischen 2 mm und 50 mm gebrochen werden. Die Fasern werden am Ende des Homogenisierungsprozesses eingebracht, um eine übermäßige Scherung und somit Beschädigung der Fasern zu minimieren. Es folgt darauf eine letzte Entlüftung durch das Entlüftungsventil 25. Das homogenisierte Rohmaterial wird nun durch die Auslassöffnung 19 in den Formhohlraum 32 des Formgebungswerkzeuges 31 befördert.

Der Formhohlraum 32 wird durch die Extruderschnecke 11 unter Druck mit dem Rohmaterial befüllt. Die Geometrie des so erzeugten Halbzeuges ist überaus konstant, da sie durch die Toleranzen des Formgebungswerkzeuges bestimmt wird. Dies führt zu einer überdurchschnittlichen Konstanz des Flächengewichtes des Halbzeuges. Lufteinschlüsse sind durch das erfindungsgemäße Aufbereitungsverfahren der Rohmaterialien und der mehrmaligen Entlüftung auf eine Minimum reduziert. Dies ist vorteilhaft für ein volumengenaues, prozesssicheres Dosieren von Presswerkzeugen zur Bauteilherstellung.

Das erfindungsgemäß hergestellte Halbzeug wird nun in ein, in der Figur 1 nicht dargestellten Presswerkzeug gelegt. Eine Reifezeit des Halbzeuges wie es beim herkömmlichen Prozess notwendig ist, entfällt beim erfindungsgemäßen Verfahren, was die Herstellungskosten deutlich verringert.

Das Presswerkzeug kann auf Grund der exakten Halbzeuggeometrien, und dem nur sehr geringen Toleranzen unterworfenen Flächengewichtes des Halbzeuges als Quetschkantenwerkzeug ausgebildet sein. Der Vorteil eines Quetschkantenwerkzeugs gegenüber eines üblicherweise verwendeten Tauchkantenwerkzeuges besteht in den deutlich reduzierten Werkzeugkosten. Tauchkantenwerkzeuge erfordern wesentlich höhere Toleranzen als Quetschkantenwerkzeuge und sind somit deutlich teurer. Zudem weisen Tauchkantenwerkzeuge einen hohen Werkzeugverschleiß auf.

In dem Presswerkzeug wird das Halbzeug in die endgültige Bauteilgeometrie gebracht. Das Werkzeug ist beheizt, wodurch auch das Halbzeug erhitzt wird. Der Härter, den das Rohmaterial enthält, härtet das Harz aus, was zu einer vernetzten duroplastischen Kunststoffmatrix führt, die durch Glasfasern und Füllstoffen verstärkt ist und als SMC-Material bezeichnet wird. Das Bauteil aus SMC-Material wird abschließend aus dem Werkzeug entformt und gegebenenfalls endbearbeitet.

## Patentansprüche

1. Verfahren zur Herstellung eines Halbzeugs in Form eines Sheet Molding Compounds für ein Bauteil aus einem duroplastischen faserverstärkten Verbundkunststoff umfassend eine Rohmaterialaufbereitung und eine Halbzeugherstellung, wobei
die Rohmaterialaufbereitung durch eine Kaskade von drei Extrudern (1,3,5) erfolgt, die jeweils mit einem Entlüftungsventil (21,23,25) ausgestattet sind und der ersten Extruder (1) über Befüllungsvorrichtungen (12,13) mit den flüssigen Komponenten des Rohmaterials befüllt wird,
• indem die Rohmaterialien homogen vermischt werden,
• das Rohmaterial Harz, Härter und Füllstoffe umfasst,
• Fasern (27) am Ende eines Homogenisierungsprozesses am Ende des dritten Extruders eingebracht werden,
• ein Halbzeug aus den aufbereiteten Rohmaterialien durch den dritten Extruder in einem Formgebungswerkzeug dargestellt wird, wobei
• die Rohmaterialaufbereitung und die Halbzeugherstellung in einem integrierten Verfahrensschritt kontinuierlich erfolgen.

2. Verfahren nach Anspruch 1,
**dadurch gekennzeichnet,**
**dass** Schnecken (7,9,11) der Extruderkaskade unterschiedliche Geometrien, Drehzahlen und Laufrichtungen aufweisen.

3. Verfahren nach einem der Ansprüche 1 bis 2,
**dadurch gekennzeichnet,**
**dass** das Rohmaterial während der Aufbereitung in den Extrudern entlüftet wird.

4. Verfahren nach einem der Ansprüche 1 bis 3,
**dadurch gekennzeichnet,**
**dass** Fasern (27) als Endlosfasern dem dritten Extruder (5) zugeführt werden und direkt vor oder während des Zuführens in dem Extruder geschnitten oder gebrochen werden.

5. Verfahren nach einem der Ansprüche 1 bis 4,
**dadurch gekennzeichnet,**
**dass** die Endlosfasern durch die Schnecke des dritten Extruders (5) zerkleinert werden.

6. Verfahren nach einem der Ansprüche 1 bis 5,
**dadurch gekennzeichnet,**
**dass** die Endlosfasern durch eine Einlassöffnung (19) in das Formgebungswerkzeug unidirektional eingeführt werden.

7. Verfahren nach einem der Ansprüche 1 bis 6,
**dadurch gekennzeichnet,**
**dass** die Fasern Glasfasern, Kohlenstofffasern, Aramidfasern oder Metallfasern sind.

## Claims

1. Method for producing a semi-finished product in the form of a sheet moulding compound for a component from a thermosetting, fibrereinforced composite plastic material, comprising a raw material preparation process and a semi-finished product production process, wherein
the raw material is prepared by means of a cascade of three extruders (1, 3, 5), each of which is provided with a vent valve (21, 23, 25), and wherein the first extruder (1) is filled with the liquid components of the raw material via filling devices (12, 13), wherein
• the raw materials are mixed homogeneously,
• the raw material comprises resins, hardeners and fillers,
• fibres (27) are introduced at the end of a homogenisation process at the end of the third extruder,
• a semi-finished product is presented from the prepared raw materials by the third extruder in a shaping tool, wherein
• the raw material preparation process and the semi-finished product production process run continuously in an integrated process step.

2. Method according to claim 1,
**characterised in that**
screws (7, 9, 11) of the extruder cascade have different geometries, speeds and running directions.

3. Method according to any of claims 1 to 2,
**characterised in that**
the raw material is vented while being prepared in the extruders.

4. Method according to any of claims 1 to 3,
**characterised in that**
the fibres (27) are fed to the third extruder (5) in the form of continuous fibres and are cut or broken directly before or while being fed into the extruder.

5. Method according to any of claims 1 to 4,
**characterised in that**
the continuous fibres are broken up by the screw of the third extruder (5).

6. Method according to any of claims 1 to 5,
**characterised in that**
the continuous fibres are introduced unidirectionally into the shaping tool through an inlet opening (19).

7. Method according to any of claims 1 to 6,
**characterised in that**
the fibres are glass fibres, carbon fibres, aramid fibres or metal fibres.

## Revendications

1. Procédé de fabrication d'un demi-produit en forme d'un mélange à mouler en feuille pour un élément constitué d'une matière plastique composite renforcée par des fibres thermodurcissables consistant en une préparation de la matière première et une fabrication de demi-produit, le traitement de la matière première s'effectuant au moyen d'une cascade de trois extrudeuses (1, 3, 5), qui sont chacune équipées d'une soupape d'aération (21, 23, 25) et la première extrudeuse (1) est remplie du constituant liquide de la matière première au moyen de dispositifs de remplissage (12, 13), en mélangeant de manière homogène les matières premières, la matière première comprenant de la résine, du durcisseur et des matières de charge, des fibres (27) étant appliquées à la fin d'un processus d'homogénéisation à l'extrémité de la troisième extrudeuse, un demi-produit constitué des matières premières préparées est présenté par la troisième extrudeuse dans un outil de formage, la préparation de la matière première et la fabrication de demi-produit s'effectuant en continu dans une étape de fabrication intégrée.

2. Procédé selon la revendication 1, **caractérisé en ce que** des vis sans fin (7, 9, 11) de la cascade d'extrudeuse présentent des géométries, des vitesses et des sens de marche différents.

3. Procédé selon l'une quelconque des revendications 1 à 2, **caractérisé en ce que** la matière première est désaérée pendant la préparation dans les extrudeuses.

4. Procédé selon l'une quelconque des revendications 1 à 3, **caractérisé en ce que** des fibres (27) en tant que fibres continues sont amenées à la troisième extrudeuse (5) et sont coupées ou brisées directement avant ou pendant l'amenée dans l'extrudeuse.

5. Procédé selon l'une quelconque des revendications 1 à 4, **caractérisé en ce que** les fibres continues sont broyées par la vis sans fin de la troisième extrudeuse (5).

6. Procédé selon l'une quelconque des revendications 1 à 5, **caractérisé en ce que** les fibres continues sont introduites de manière unidirectionnelle par une ouverture d'entrée (19) dans l'outil de formage.

7. Procédé selon l'une quelconque des revendications 1 à 6, **caractérisé en ce que** les fibres sont des fibres de verre, des fibres de carbone, des fibres d'Aramide ou des fibres métalliques.
